# EUROPEAN PATENT APPLICATION

(11) **EP 2 733 636 A1**
(43) Date of publication of application: **21.05.2014**
(21) Application number: 12192796.6
(22) Date of filing: 15.11.2012
(51) Int. Cl.: G06F 21/36, G06F 21/32

(54) **Secure screen lock with pressure pattern**

(71) Applicant: Sony Mobile Communications AB, 221 88 Lund (SE)
(72) Inventor: Moliner, Olivier, SE- 224 60 Lund (SE)
(74) Representative: Östlund, Johanna

(57) **Abstract**

The present invention discloses a system and method for authenticating a user of a mobile device. The mobile device comprises a pressure sensor for measuring pressure vertically applied to a surface of the mobile device. The method comprises the steps: applying an increasing and decreasing vertical pressure onto the surface of the mobile device; recording a pressure pattern by measuring said pressure over time using said pressure sensor; comparing said pressure pattern with at least one predetermined pressure pattern; determining whether said pressure pattern corresponds to at least one predetermined pressure pattern; authenticating said user using said determination.

## Description

### TECHNICAL FIELD

The present invention relates to a method for authenticating a user of a mobile device and a mobile device using said method.

### TECHNICAL BACKGROUND

In today's mobile devices there are several different ways to start the display and to unlock the device. All methods include at least two steps where one is to turn on the display and the other is to perform some kind of swipe of a finger on the display to unlock the display. For security reasons, an authentication step may also be activated, wherein a code is to be inserted after the first two steps to authenticate the user to allow access to the SIM card or to the device. The authentication code can be either a series of numbers (a regular pin number) or some kind of swipe pattern drawn on the display with a finger or a stylus. The user registers which authentication code should be used beforehand when entering settings into the mobile device. If the inputted authentication code matches the beforehand registered one, the user is allowed access to the operating mode of the mobile device.

A problem with the methods used today is that there are many steps involved in making the mobile device operable. Two or three steps are required to access the operating mode of the device.

Another problem with the current methods is that another person may easily see the authentication code if standing behind the person using the device. Thus, to input an authentication code by inputting a pin number or a swipe pattern is not a secure solution for authenticating a user since it can easily be accessed visually. Moreover, in the swipe pattern case, smudges left by the fingers on the screen may reveal the secure swipe pattern.

### SUMMARY OF INVENTION

With the above description in mind, an aspect of the present invention is to provide a way to increase the security and usability of a mobile device.

The object of the present invention relates to providing a mobile device with increased security and usability using pressure sensors for measuring pressure on the surface of the mobile device.

A first aspect of the present invention relates to a mobile device comprising a pressure sensor configured to measure an increasing and decreasing pressure applied vertically onto a surface of the mobile device, a recorder configured to record a pressure pattern over time using said pressure sensor, a comparator configured to compare the pressure pattern recorded by said recorder with at least one predetermined pressure pattern, a determining means configured to determine whether the pressure pattern recorded by said recorder corresponds to at least one predetermined pressure pattern and a processor configured to authenticate a user if the pressure pattern corresponds to the at least one predetermined pressure pattern.

The effect of having a pressure sensor configured to measure both increasing and decreasing pressure which is applied vertically onto the surface of the mobile device is that a pressure pattern can be recorded. By recording a pressure pattern where the pressure is applied vertically and comparing that pressure pattern to predetermined stored pressure patterns, a way to achieve increased security is provided.

The mobile device may further comprise that the processor is configured to trigger an action in the mobile device if the authentication is approved.

An advantage of the invention is that a user can register several pressure patterns as predetermined pressure patterns and depending on which pressure pattern the user uses when authenticating, the mobile device can trigger an action in the mobile device. By using several predetermined pressure patterns the usability of the mobile device is increased since it reduces even more steps for the user.

The mobile device may further comprise that the processor is configured to turn on a touch sensitive display on the mobile device if the authentication is approved.

Another advantage which improves the usability of the mobile device is that when using the invention to authenticate a user there is no need to start the display of the mobile device before inputting the pressure pattern. In other words, with the present invention it is possible to decrease the steps taken by a user to get to an operating mode to one step. One applied pressure pattern may induce the mobile device to start the display, unlocking it and to authenticate the user. It may also trigger an action with the same pressure pattern.

The mobile device may further comprise that the pressure sensor is located such that pressure on the touch sensitive display on the mobile device is measured.

An effect of using a pressure sensor for authenticating a user is that the pressure sensor can be located anywhere on the mobile device. A natural place to locate the pressure sensor is under the touch sensitive display so that it is intuitive to the user where to input the pressure pattern.

The mobile device may further comprise means for providing haptic feedback.

An advantage of using haptic feedback in combination with the pressure pattern is that it may provide the user with an indication of how much pressure is/has been applied to the pressure sensor. Haptic feedback may be useful for the user if the user finds it difficult to produce the right pressure pattern.

A second aspect of the present invention relates to a method for authenticating a user of a mobile device. The mobile device comprises a pressure sensor for measuring pressure vertically applied to a surface of the mobile device. The method comprises the steps of:
- applying an increasing and decreasing vertical pressure onto the surface of the mobile device;
- recording a pressure pattern by measuring said pressure over time using said pressure sensor;
- comparing said pressure pattern with at least one predetermined pressure pattern;
- determining whether said pressure pattern corresponds to at least one predetermined pressure pattern;
- authenticating said user using said determination.

As discussed above, the effect of having a pressure sensor configured to measure both increasing and decreasing pressure which is applied vertically onto the surface of the mobile device is that a pressure pattern can be recorded which may be used as a secure way of authenticating a user. The pressure pattern may be used as a visually invisible authentication code.

The method for authenticating a user of a mobile device may further comprise the step of:
- triggering an action in the mobile device if the authentication is approved.

The method for authenticating a user of a mobile device may further comprise the step of:
- turning on a touch sensitive display on the mobile device if the authentication is approved.

The method for authenticating a user of a mobile device may further comprise that which action is triggered depends on which of the at least one predetermined pressure patterns the pressure pattern corresponds to.

An advantage of this is that the user may predetermine which action should be triggered by which pressure patterns. Another advantage is that, as discussed above, the number of steps performed by the user to start the display, unlocking it, authenticate a user and triggering an action may be reduced to one step.

The method for authenticating a user of a mobile device may further comprise that the action in the mobile device is any of; starting an application, calling an emergency number, starting a camera or setting the mobile device to silent mode.

The effect of having predetermined pressure patterns is that the user can decide which actions the user should be able to trigger when inputting the pressure pattern. The action may be any action possible to take in the mobile device.

The method for authenticating a user of a mobile device may further comprise that the step of comparing said pressure pattern with at least one predetermined pressure pattern is carried out with a machine learning algorithm.

An effect of using a machine learning algorithm is that the inputted pressure pattern needs to be similar to any of the at least one predetermined pressure patterns but not exactly the same since that is very hard to achieve by the user.

The method for authenticating a user of a mobile device may further comprise that the pressure pattern is a series of integers and wherein the step of recording the pressure pattern comprises the following steps:
- dividing possible measured pressure into pressure levels;
- registering a value each time the measured pressure changes from one pressure level to another;
- creating the pressure pattern using the registered values.

An advantage of using a series of integers as a pressure pattern is that it makes the steps of comparing the pressure pattern to predetermined pressure patterns simpler. If a series of integers is used it is possible to compare it to predetermined pressure patterns which are then also series of integers. Such a comparison is a simple process. Dividing the possible range of measured pressure into pressure levels makes it possible to produce a pressure pattern as a series of integers. Another advantage is that if haptic feedback is provided each time the sensed pressure changes from one pressure level to another the user can easily keep track of how much pressure he/she has applied.

The method for authenticating a user of a mobile device may further comprise that the step of registering a value each time the measured pressure changes from one pressure level to another comprises the following steps:
- increasing a counter by one each time the sensed pressure changes from a lower level to a higher level;
- decreasing said counter by one each time the sensed pressure changes from a higher level to a lower level;
   and wherein the step of creating the pressure pattern using the registered values further comprises:
- storing the value of said counter last in said series of integers when the change in pressure changes direction to create the pressure pattern.

An advantage with increasing and decreasing a counter and storing the value of the counter in the series of integers when the change in pressure changes direction is that it provides a simple way of producing the pressure pattern as a series of integers.

The method for authenticating a user of a mobile device may further comprise that the step of registering a value each time the measured pressure changes from one pressure level to another further comprises the following step:
- counting the number of times the sensed pressure changes from one pressure level to another;
   and wherein the step of creating the pressure pattern using the registered values further comprises:
- storing the counted number last in said series of integers and restarting the counting each time the change in sensed pressure changes direction to create the pressure pattern.

An advantage of counting the number of times the pressure changes from one pressure level to another and storing that counted number when the change in pressure changes direction is that it provides an alternative and simple way of producing the pressure pattern as a series of integers.

The method for authenticating a user of a mobile device may further comprise that the mobile device provides haptic feedback when the increasing and decreasing vertical pressure onto the surface of the mobile device is applied.

As described above, an advantage of using haptic feedback in combination with the pressure pattern is that it may provide the user with an indication of how much pressure is/has been applied to the pressure sensor. Haptic feedback may be especially useful when the possible measured pressure is divided into pressure levels. The mobile device may then provide haptic feedback each time the applied pressure changes from one pressure level to another. It is then easy for the user to feel how many levels he/she has passed.

### BRIEF DESCRIPTION OF FIGURES

Further objects, features, and advantages of the present invention will appear from the following detailed description of some embodiments of the invention, wherein some embodiments of the invention will be described in more detail with reference to the accompanying drawings, in which:
Figure 1 shows a mobile device onto which pressure is applied.
Figure 2 illustrates a block diagram of the method for authenticating a user.
Figure 3 illustrates an additional block in the block diagram of figure 2.
Figure 4 illustrates an additional block in the block diagram of figure 2.
Figure 5 illustrates the step of recording a pressure pattern in further detail.
Figure 6 illustrates the step of registering a value in further detail.
Figure 7 illustrates the step of creating the pressure pattern with values in further detail.
Figure 8 illustrates the step of registering a value in further detail.
Figure 9 illustrates the step of creating the pressure pattern with values in further detail.
Figure 10 shows an example of how the pressure pattern may be produced when it is a series of integers.
Figure 11 shows an example of an inputted pressure pattern.
Figure 12 shows an example of an inputted pressure pattern where the possible measured pressure is divided into pressure levels.

### DETAILED DESCRIPTIONS OF INVENTION

Embodiments of the present invention will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art.

Embodiments of the present invention will be exemplified using a mobile communication device such as a mobile phone. However, it should be appreciated that the invention is as such equally applicable to electronic devices in general which have any kind of security step for authenticating a user. Examples of such devices may for instance be any type of mobile phone, laptops (such as standard, ultra portables, netbooks, micro laptops, and pads), handheld computers, PDAs, gaming devices, accessories to mobile phones, etc. However, for the sake of clarity and simplicity, the embodiments outlined in this specification are only exemplified with and related to mobile communication devices hereinafter referred to as mobile devices.

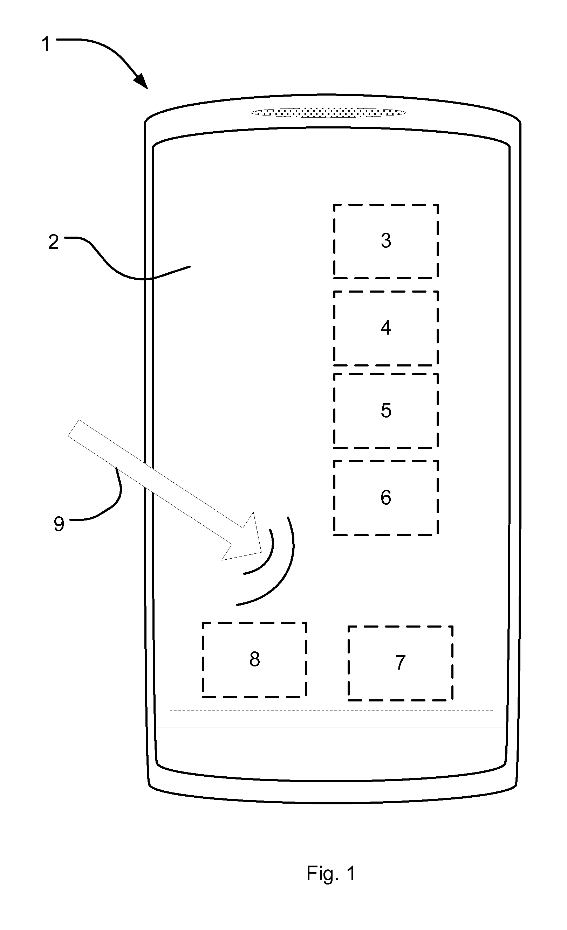

Fig. 1 shows a mobile device 1 with a touch sensitive display 2. The mobile device comprises a pressure sensor 3 configured to measure an increasing and decreasing pressure applied vertically onto a surface of the mobile device 1. Vertically applied pressure onto the mobile device 1 is pressure applied in the z-direction when the x-y-plane is in the surface of the mobile device 1. The pressure sensor 3 may be located anywhere on the mobile device to sense and measure pressure 9 applied onto any surface. For example, the pressure sensor may be located such that pressure 9 on the touch sensitive display is measured. The pressure sensor may also be located elsewhere, for example, such that pressure 9 is measured on the side or the back of the mobile device 1. The pressure sensor 3 may be any kind of force collector type pressure sensor. The pressure sensor measures the force applied over an area. When having a pressure sensor 3 configured to measure both increasing and decreasing pressure which is applied vertically onto the surface of the mobile device 1, a pressure pattern may be recorded. The pressure pattern is a measurement of how the vertically applied pressure onto the surface of the mobile device 1 varies.

The mobile device 1 according to Fig. 1 further comprises a recorder 4 configured to record a pressure pattern over time using said pressure sensor 3 and a comparator 5 configured to compare the pressure pattern recorded by the recorder 4 with at least one predetermined pressure pattern. The recorder receives the output signal of the pressure sensor. The recorder stores a pressure pattern for use in the comparator 5. The recorded pressure pattern may be stored in a memory, which may e.g. be an RAM, a flash memory or a ROM, before being used in the comparator. The pressure pattern may also be used directly in the comparator without being stored. The at least one predetermined pressure pattern is a pressure pattern registered by the user beforehand, when the user customizes the mobile device with personal settings. The predetermined pressure pattern is the pattern that the user registers as the key, i.e. authentication code, for authenticating the user. The comparator compares the inputted pressure pattern to the predetermined pressure pattern to determine if the user knows the right authentication code. One predetermined pressure pattern is minimum for registering the pressure pattern that authenticates the user but several is possible if the user wants to have a choice of what the mobile device more does upon authenticating, this is discussed further bellow.

The mobile device 1 according to Fig. 1 further comprises a determining means 6 which is configured to determine whether the pressure pattern recorded by the recorder 4 corresponds to at least one predetermined pressure pattern and a processor 7 which is configured to authenticate a user if the pressure pattern corresponds to the at least one predetermined pressure pattern. The determining means 6 uses information obtained from the comparator 5 when determining whether the pressure pattern corresponds to any of the predetermined pressure patterns. If the pressure pattern corresponds to any of the stored predetermined pressure patterns the user is authenticated and the user is free to use the mobile device. The term "corresponds to" applies to pressure patterns with a close similarity to or even an exact match with the predetermined pressure pattern. By recording a pressure pattern where the pressure is applied vertically and comparing that pressure pattern to predetermined stored pressure patterns, a way to achieve increased security is provided. The pressure pattern is used as a code for authenticating the user and since it is inputted vertically onto the surface of the device it is not possible to visually see the code for a person standing behind the user; the pattern is "invisible" to third parties. If using a pin number as a password or a "swipe pattern unlock scheme", third parties looking at the screen while the user authenticates it can see the password/pattern used. Moreover, in the swipe pattern case, smudges left by the fingers on the screen can reveal the secure swipe pattern. With the present solution, the only thing third parties see is that the user lays a finger or a stylus on the screen. As the whole display 2 or anywhere on the mobile device 1 can be used to register the pressure pattern, smudges cannot be used to guess the pressure pattern. An advantage of using pressure patterns as authentication codes is that complicated patterns can be remembered easily thanks to muscle memory, and that patterns are not easily transferable orally or in written form.

The recorder, the comparator and the determining means may be implemented in hardware or software or in a combination thereof.

Since the pressure pattern is a measurement of the vertically applied pressure onto the surface of the mobile device 1, there is no need to move the finger or the object applying pressure onto the mobile device 1 sideways in relation to the surface of the mobile device 1. There is no need for the finger or object to move sideways in the plane of the surface of the mobile device 1. The applied pressure may be applied only on one spot on the surface of the mobile device 1.

The mobile device 1 may further comprise that the processor 7 of Fig. 1 is configured to trigger an action in the mobile device 1 if the authentication is approved. When the authentication is approved, the user is free to use all functions of the mobile device 1. The user can register predetermined pressure patterns which, when entered as a pressure pattern, triggers an action in the mobile device 1 in addition to allowing the user access to all functions of the mobile device 1. A user can register several pressure patterns as predetermined pressure patterns. The mobile device may be configured to trigger different actions in the mobile device depending on which pressure pattern the user uses when authenticating. By using several predetermined pressure patterns the usability of the mobile device is increased since it reduces even more steps for the user. If the user wants to, for example, start the camera, the camera may be chosen and started already while inputting the pressure pattern when authenticating the user.

The processor 7 of Fig. 1 may be configured to turn on a touch sensitive display 2 on the mobile device 1 if the authentication is approved. When using the invention to authenticate a user there is no need to start the display 2 of the mobile device 1 before inputting the pressure pattern. Since it is the pressure sensor 3 that measures the pressure there is no need for the touch sensitive display to be activated for inputting the pressure pattern.

The processor 7 may also be configured to unlock the touch sensitive display 2 on the mobile device 1 if the authentication is approved. When the pressure patterns consists of a pattern of both increased and decreased pressure there is very little risk of unlocking the touch sensitive display 2 by mistake.

In other words, with the present invention it is possible to decrease the steps taken by a user to get to an operating mode to one step. One applied pressure pattern may induce the mobile device to start the display, unlocking it and to authenticate the user. It may also trigger an action with the same pressure pattern. In other words, up to four steps may be reduced to one step with the present invention.

The mobile device 1 may further comprise that the pressure sensor 3 is located such that pressure on the touch sensitive display 2 on the mobile device 1 is measured. The pressure sensor 3 may be located anywhere on the mobile device 1 but a natural place to locate the pressure sensor 3 is under the touch sensitive display 2 so that it is intuitive to the user where to input the pressure pattern. When the pressure sensor 3 is located such that pressure on the touch sensitive display 2 on the mobile device 1 is measured, an area covering essentially the whole display can be used to input the pressure pattern. Since the pressure pattern is only measured vertically in relation to the surface of the mobile device 1, it does not matter if the user moves around the finger/object on the touch sensitive display or not.

The mobile device 1 according to Fig. 1 may further comprise means for providing haptic feedback 8. When using haptic feedback in combination with the pressure pattern it may provide the user with an indication of how much pressure is/has been applied to the pressure sensor. The mobile device 1 may, for example, provide haptic feedback at certain pressure intervals when the pressure sensor 3 measures pressure applied onto the mobile device 1. The mobile device 1 may also provide haptic feedback when the pressure sensor 3 first senses applied pressure. The mobile device 1 may also provide haptic feedback when a pressure pattern has been accepted. Haptic feedback may be useful for the user if the user finds it difficult to produce the right pressure pattern.

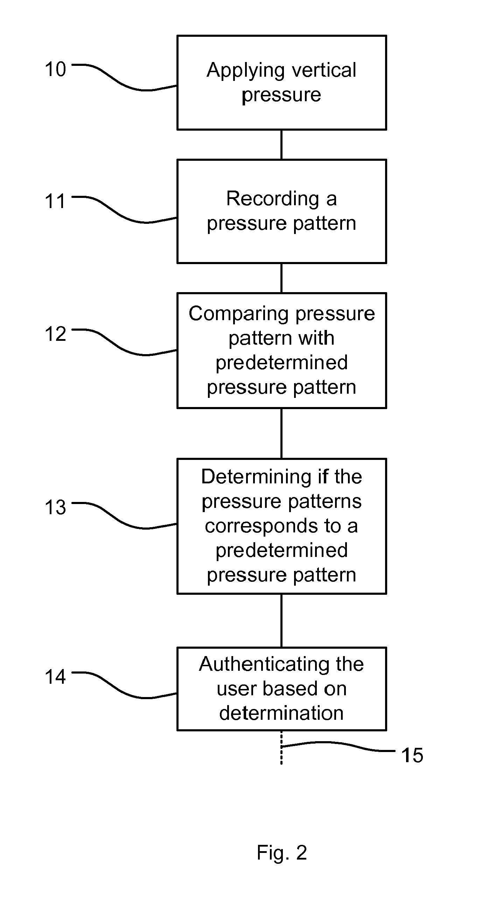

Fig. 2 shows a block diagram of a method for authenticating a user of the mobile device 1. The method is typically executed when the user wants to activate his/her mobile device after the lock has been activated, for example when the screen lock has been activated or the display has been turned off. When the lock has been activated the authentication step for authenticating the user will also be activated. The activation of the authentication step may activate after the lock is activated. The method may also be also be performed after it has been switched of e.g. in his pocket. In the first step, the user applies a pressure onto a surface of the mobile device by pressing with his/her finger on the display of the mobile device. As an alternative he/she may use his/her finger or another object. As previously discussed, the mobile device 1 comprises a pressure sensor 3 for measuring pressure vertically applied to a surface of the mobile device. The method comprises the steps of:
- applying 10 an increasing and decreasing vertical pressure onto the surface of the mobile device 1. The applied pressure comprises both increasing and decreasing pressure to produce a pressure pattern. In other words, the applied pressure comprises a continuous series of harder and lighter touches. The applied pressure may also comprise pressures with different lengths in time, i.e. continuous longer and shorter pressures. Vertically applied pressure is pressure applied in the z-direction when the x-y-plane is in the surface of the mobile device 1.
- recording 11 a pressure pattern by measuring said pressure over time using said pressure sensor. Depending on the performance speed of the mobile device 1, the following step of comparing the pressure pattern may be initiated before the step of recording is completed. The step of comparing the pressure pattern may be initiated as soon as there is any data recorded in the pressure pattern.
- comparing 12 said pressure pattern with at least one predetermined pressure pattern. The user registers a number of predetermined pressure patterns beforehand depending on how many different outcomes the user wishes to have to choose from. The predetermined pressure pattern has been previously discussed when referring to Fig. 1
- determining 13 whether said pressure pattern corresponds to at least one predetermined pressure pattern. The comparison from the previous step is used to determine if the inputted pressure pattern corresponds to any of the beforehand registered predetermined pressure patterns and which of the predetermined pressure patterns is the corresponding one.
- authenticating 14 said user using said determination. The authentication is used to make sure that the right user is using the mobile device 1. It is a security measure to prevent access for unauthorised users. The determining step decides it the pressure pattern is the same, or if it has a close similarity, as any of the predetermined pressure patterns. If it is decided in the determining step that there is a corresponding predetermined pressure pattern to the inputted pressure pattern, the authenticating step authenticates the user; i.e. deems the user to have the right to access the mobile device, i.e. allows the user access to the operating mode of the mobile device.

As discussed above, the effect of having a pressure sensor 3 configured to measure both increasing and decreasing pressure which is applied vertically onto the surface of the mobile device 1 is that a pressure pattern can be recorded which may be used as a secure way of authenticating a user. The pressure pattern may be used as a visually invisible authentication code.

The mobile device 1 may use the recorder 4 to record a series of data elements each containing a timestamp and a pressure value to produce the pressure pattern.

When using the recorder, the comparator, the determining means and the processor for performing the steps of recording, comparing, determining and authenticating as defined above, a microcontroller may be used. The main CPU of the mobile device 1 does not have to be activated to perform the steps. By using a microcontroller to perform the steps, power can be saved in the mobile device; the CPU does not have to be activated each time any kind of pressure is applied onto the mobile device 1. The CPU is activated after a user has inputted any of the predetermined pressure patterns.

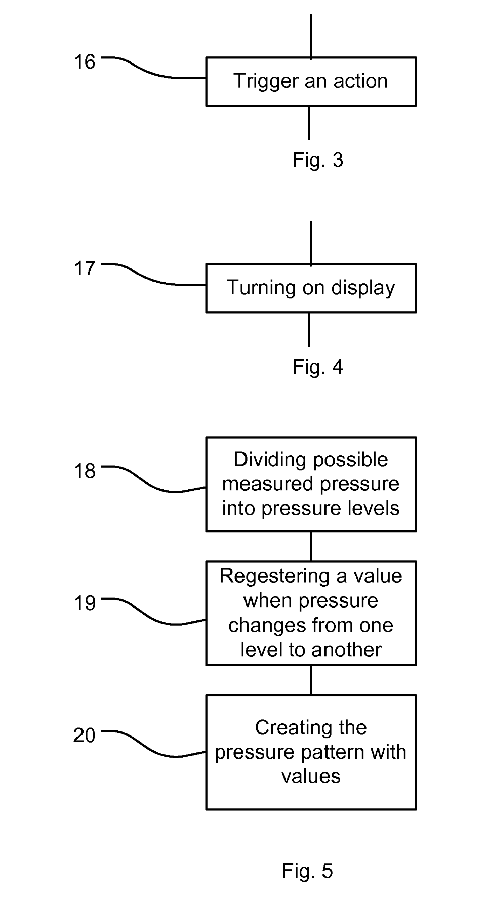

Fig. 3 shows an additional step in the method for authenticating a user of a mobile device 1. The method may further comprise the step of:
- triggering an action 16 in the mobile device 1 if the authentication is approved. An action can be any action a user might want to do in the mobile device 1. The step may be inserted in the block diagram of Fig. 2 at the dotted line 15.

Fig. 4 shows an additional step in the method for authenticating a user of a mobile device 1. The method may further comprise the step of:
- turning on 17 a touch sensitive display 2 on the mobile device 1 if the authentication is approved. The step may be inserted in the block diagram of Fig. 2 at the dotted line 15.

The method for authenticating a user of a mobile device 1 may further comprise that which action is triggered depends on which of the at least one predetermined pressure patterns the pressure pattern corresponds to. The user has full control over which pressure patters should be used to trigger which actions. All pressure patterns which correspond to any predetermined pressure pattern will authenticate the user. All pressure patterns which correspond to any predetermined pressure pattern may also turn on the touch sensitive display 2. All pressure patterns which correspond to any predetermined pressure pattern may also unlock the touch sensitive display 2. The pressure patterns may also trigger an action in the mobile device 1 wherein the action is chosen by choosing which pressure pattern to input. In other words, the user may predetermine which action should be triggered by which pressure patterns when choosing and registering the predetermined pressure pattern upon inputting settings into the mobile device. When inputting the predetermined pressure patterns, the user may choose what will happen when the corresponding pressure pattern is inserted. The number of steps performed by the user to turning on the display 2, unlocking the display 2, authenticating a user and triggering an action may be reduced to one step. The user may, for example, choose to have a simple pressure pattern that only starts the display for times when the user only wants to check what time it is. The user may, for example, choose to have a pressure pattern that starts the display, unlocks the display and authenticates the user if the user wants to reach the operating mode of the mobile device. The user may, for example, choose to have a pressure pattern that starts the display, unlocks the display, authenticates the user and triggers an action in the mobile device 1.

The pressure pattern authentication code may also be useful when starting the mobile device from a switched of mode. When customizing the mobile device the user may choose to use a pressure pattern instead of a pin number when unlocking the SIM card upon starting the mobile device.

The method for authenticating a user of a mobile device 1 may further comprise that the action in the mobile device is any of; starting an application, calling an emergency number, starting a camera or setting the mobile device to silent mode. The action may be any action the user might want to trigger when picking up the mobile device 1. When having predetermined pressure patterns, the user can decide which actions he/she should be able to trigger when inputting the pressure pattern. The action may be any action possible to take in the mobile device. This makes it possible for the user to, for example, start the camera while still picking up the mobile device or to call the emergency number discreetly while the mobile device is still in the users pocket.

The method for authenticating a user of a mobile device 1 may further comprise that the step of comparing 12 said pressure pattern with at least one predetermined pressure pattern, see Fig. 2, is carried out with a machine learning algorithm. Any type of classification algorithm may be used to perform the comparison. Examples of algorithms that may be used are:
Support Vector Machines, Neural networks, Logistic Regression, K-nearest neighbour,
decision trees and Naive Bayes Classifier. Examples of ensemble learning algorithms are:
   Random Forest, Boosting, Bagging, Averaging and Stacking. These algorithms and their implementation are commonly known to the person skilled in the art. When using a machine learning algorithm, or any of the algorithms above, the inputted pressure pattern needs to be similar to any of the at least one predetermined pressure patterns but not exactly the same.
   To produce an exact pressure pattern each time is very hard to achieve by the user. The algorithm generates a model of the pressure pattern and determines whether said pressure pattern corresponds to any of the at least one stored predetermined pressure patterns. In order to improve the accuracy of the algorithms when determining if a pressure pattern corresponds to a predetermined pressure pattern even if they are not a hundred percent the same, the mobile device 1 might ask the user to insert the pressure pattern several times when recording the predetermined pressure patterns.

Fig. 5 shows a block diagram of what may be performed in the step of recording 11 the pressure pattern, see Fig. 2.The method for authenticating a user of a mobile device 1 may further comprise that the pressure pattern is a series of integers and wherein the step of recording 11 the pressure pattern comprises the following steps:
- dividing 18 possible measured pressure into pressure levels;
- registering 19 a value each time the measured pressure changes from one pressure level to another;
- creating 20 the pressure pattern using the registered values.

When using a series of integers as a pressure pattern, the steps of comparing the pressure pattern to predetermined pressure patterns is made simpler. Instead of using the full range of pressure values given by the pressure sensor 3, the range is divided into a few discrete pressure levels. If a series of integers is used it is possible to compare it to predetermined pressure patterns which are then also series of integers. Such a comparison is a simple process. Dividing the possible range of measured pressure into pressure levels makes it possible to produce a pressure pattern as a series of integers. Another advantage is that if haptic feedback is provided each time the sensed pressure changes from one pressure level to another the user can easily keep track of how much pressure he/she has applied. A further advantage is that a pressure pattern made as a series of integers does not depend on the timing of the user when inputting the pressure pattern.

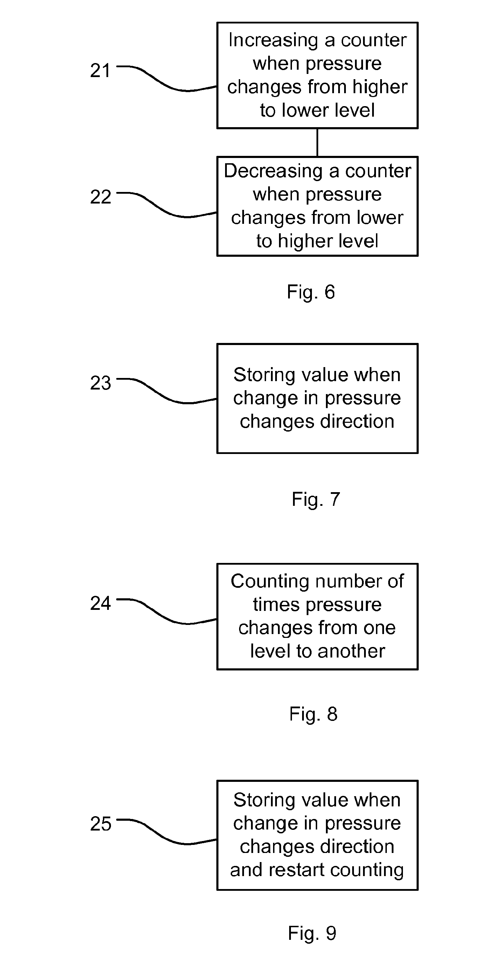

Fig. 6 shows a block diagram of what may be performed in the step of registering 19 a value, see Fig. 5. The method for authenticating a user of a mobile device 1 may further comprise that the step of registering 19 a value each time the measured pressure changes from one pressure level to another comprises the following steps:
- increasing 21 a counter by one each time the sensed pressure changes from a lower level to a higher level;
- decreasing 22 said counter by one each time the sensed pressure changes from a higher level to a lower level;

Fig. 7 shows a block diagram of what may be performed in the step of creating 20 the pressure pattern, see Fig. 5. The step of creating 20 the pressure pattern using the registered values may further comprise:
- storing 23 the value of said counter last in said series of integers when the change in pressure changes direction to create the pressure pattern.

When increasing and decreasing a counter and storing the value of the counter in the series of integers when the change in pressure changes direction, a simple way of producing the pressure pattern as a series of integers is provided. By using a counter which is increased when moving from a lower pressure level to a higher and vice versa, the level of the pressure level where the pressure change changes direction is used in the pressure pattern.

Fig. 8 shows a block diagram of what may be performed in the step of registering 19 a value, see Fig. 5. The method for authenticating a user of a mobile device 1 may further comprise that the step of registering 19 a value each time the measured pressure changes from one pressure level to another further comprises the following step:
- counting 24 the number of times the sensed pressure changes from one pressure level to another;

Fig. 9 shows a block diagram of what may be performed in the step of creating 20 the pressure pattern, see Fig. 5. The step of creating 20 the pressure pattern using the registered values may further comprise:
- storing 25 the counted number last in said series of integers and restarting the counting each time the change in sensed pressure changes direction to create the pressure pattern.

When counting the number of times the pressure changes from one pressure level to another and storing that counted number when the change in pressure changes direction, an alternative and simple way of producing the pressure pattern as a series of integers is provided.

The method for authenticating a user of a mobile device may further comprise that the mobile device provides haptic feedback when the increasing and decreasing vertical pressure onto the surface of the mobile device is applied. As described above, when using haptic feedback in combination with the pressure pattern, it may provide the user with an indication of how much pressure is/has been applied to the pressure sensor. Haptic feedback may be especially useful when the possible measured pressure is divided into pressure levels. The mobile device may then provide haptic feedback each time the applied pressure changes from one pressure level to another. It is then easy for the user to feel how many levels he/she has passed.

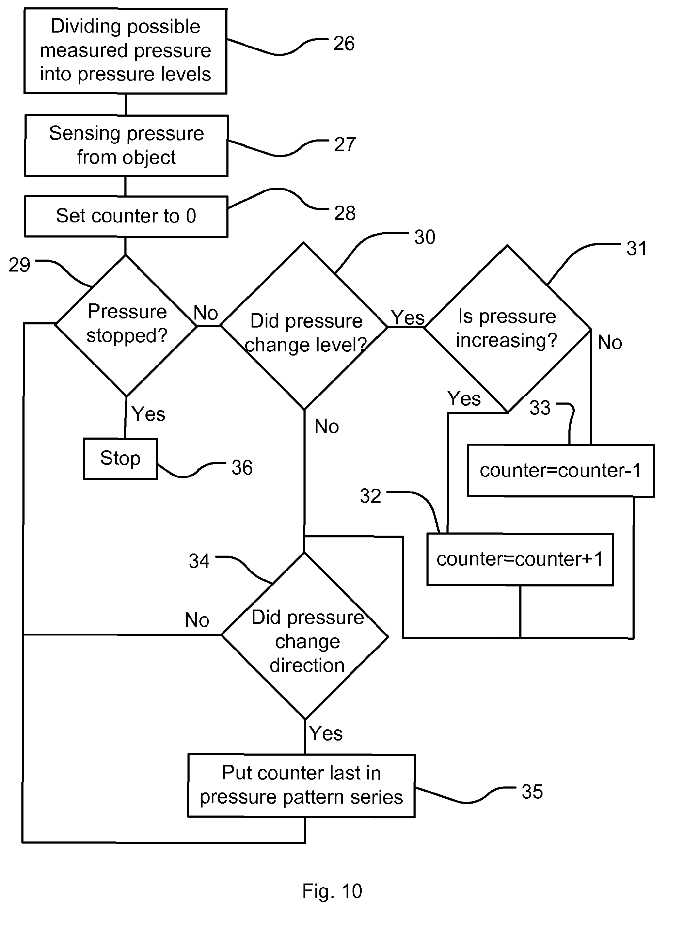

Fig. 10 shows a block diagram of an example of how a pressure pattern comprising of a series of integers according to the methods illustrated in Figs. 5, 6 and 7 may be produced. The first step is to divide 26 the possible measured pressure into pressure levels. When sensing 27 pressure from an object, such as a finger or a stylus, a counter is set 28 to 0. If the pressure stops 29 being applied, the process stops. If the pressure is applied continuously, the process continues. If the applied amount of pressure changes 30 from one pressure level to another, the counter is increased by one 32 if the pressure is increasing 31 and decreased by one 33 if the pressure is decreasing 31. As long as the applied pressure does not change 30 pressure level, the counters are left the same as before. If the applied pressure changes direction 34, for example if the applied pressure changes from decreasing to increasing or vice versa, the counter is put 35 last in the pressure pattern series. That is, in the first empty position in the series of integers. If the pressure does not change direction 33, the method restarts at the step of checking if the applied pressure stopped 29. When the counter has been inserted in the pressure pattern series, the method also restarts at the step of checking if the applied pressure stopped 29. If the applied pressure has stopped 29, the method of producing the pressure pattern stops 36.

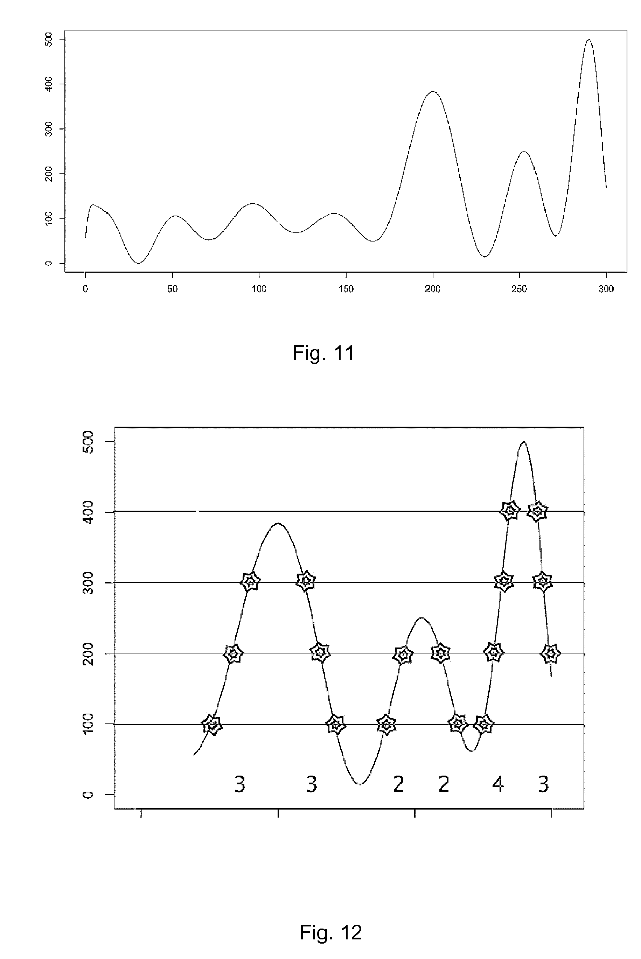

Fig. 11 shows an example of a pressure pattern that has been inputted by a user. The y-axis is the amount of inputted pressure and the x-axis is time. When the curve goes up, the applied pressure increases, and vice versa.

Fig. 12 shows an example of a pressure pattern that has been inputted by a user. The y-axis is the amount of inputted pressure and the x-axis is time. The horizontal lines in the graph are examples of how the possible measured pressure pattern can be divided into pressure levels. The stars at each point the curve crosses a pressure level indicates that the mobile device 1 may provide haptic feedback at that time for indicating that a pressure level has been crossed. The haptic feedback when crossing to another pressure level helps the user feel how much pressure he/she has increased or decreased. The numbers above the x-axis is an example of how the pressure pattern might look like if this was the actual inputted pressure pattern in the embodiment of the invention according to Figs. 5, 8 and 9.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

The foregoing has described the principles, preferred embodiments and modes of operation of the present invention. However, the invention should be regarded as illustrative rather than restrictive, and not as being limited to the particular embodiments discussed above. The different features of the various embodiments of the invention can be combined in other combinations than those explicitly described. It should therefore be appreciated that variations may be made in those embodiments by those skilled in the art without departing from the scope of the present invention as defined by the following claims.

## Claims

1. A mobile device (1) comprising:
- a pressure sensor (3) configured to measure an increasing and decreasing pressure applied vertically onto a surface of the mobile device (1);
- a recorder (4) configured to record a pressure pattern over time using said pressure sensor;
- a comparator (5) configured to compare the pressure pattern recorded by said recorder with at least one predetermined pressure pattern;
- a determining means (6) configured to determine whether the pressure pattern recorded by said recorder corresponds to at least one predetermined pressure pattern;
- a processor (7) configured to authenticate a user if the pressure pattern corresponds to the at least one predetermined pressure pattern.

2. The mobile device (1) according to claim 1, wherein the processor (7) is further configured to trigger an action in the mobile device (1) if the authentication is approved.

3. The mobile device (1) according to claim 1 or 2, wherein the processor (7) is further configured to turn on a touch sensitive display (2) on the mobile device (1) if the authentication is approved.

4. The mobile device (1) according to any of the previous claims, wherein the pressure sensor (3) is located such that pressure on a touch sensitive display (2) on the mobile device (1) is measured.

5. The mobile device (1) according to any of the previous claims, wherein the mobile device (1) further comprises means for providing haptic feedback (8).

6. Method for authenticating a user of a mobile device (1) wherein said mobile device (1) comprises a pressure sensor (3) for measuring pressure vertically applied (9) to a surface of the mobile device (1); said method comprising the steps of:
- applying (10) an increasing and decreasing vertical pressure (9) onto the surface of the mobile device (1);
- recording (11) a pressure pattern by measuring said pressure over time using said pressure sensor (3);
- comparing (12) said pressure pattern with at least one predetermined pressure pattern;
- determining (13) whether said pressure pattern corresponds to at least one predetermined pressure pattern;
- authenticating (14) said user using said determination.

7. The method according to claim 1, further comprising the step of:
- triggering an action (16) in the mobile device (1) if the authentication is approved.

8. The method according to claim 1, further comprising the step of:
- turning on (17) a touch sensitive display (2) on the mobile device (1) if the authentication is approved.

9. The method according to claim 6, wherein which action is triggered depends on which of the at least one predetermined pressure patterns the pressure pattern corresponds to.

10. The method according to claim 6 or 8, wherein the action in the mobile device (1) is any of; starting an application, calling an emergency number, starting a camera or setting the mobile device (1) to silent mode.

11. The method according to any of claims 5 to 9, wherein the step of comparing said pressure pattern with at least one predetermined pressure pattern is carried out with a machine learning algorithm.

12. The method according to claim 5, wherein the pressure pattern is a series of integers and wherein the step of recording the pressure pattern comprises the following steps:
- dividing (18) possible measured pressure into pressure levels;
- registering (19) a value each time the measured pressure changes from one pressure level to another;
- creating (20) the pressure pattern using the registered values.

13. The method according to claim 11, wherein the step of registering (19) a value each time the measured pressure changes from one pressure level to another comprises the following steps:
- Increasing (21) a counter by one each time the sensed pressure changes from a lower level to a higher level;
- decreasing (22) said counter by one each time the sensed pressure changes from a higher level to a lower level;
and wherein the step of creating (20) the pressure pattern using the registered values further comprises:
- storing (23) the value of said counter last in said series of integers when the change in pressure changes direction to create the pressure pattern.

14. The method according to claim 11, wherein the step of registering (19) a value each time the measured pressure changes from one pressure level to another further comprises the following step:
- counting (24) the number of times the sensed pressure changes from one pressure level to another;
and wherein the step of creating (20) the pressure pattern using the registered values further comprises:
- storing (25) the counted number last in said series of integers and restarting the counting each time the change in sensed pressure changes direction to create the pressure pattern.

15. The method according to any of claims 5 to 13, wherein the mobile device (1) provides haptic feedback when the increasing and decreasing vertical pressure onto the surface of the mobile device (1) is applied.
